# EUROPEAN PATENT SPECIFICATION

(11) **EP 2 538 621 B1**
(45) Date of publication and mention of the grant of the patent: **04.04.2018**
(21) Application number: 11771550.8
(22) Date of filing: 12.04.2011
(51) Int. Cl.: H04L 29/12

(54) **DATA MESSAGE PROCESSING METHOD, SYSTEM AND ACCESS SERVICE NODE**
DATENNACHRICHTENVERARBEITUNGSVERFAHREN, SYSTEM UND ZUGRIFFSDIENSTKNOTEN
PROCÉDÉ DE TRAITEMENT DE MESSAGE DE DONNÉES, SYSTÈME ET NOEUD DE SERVICE D'ACCÈS

(30) Priority: 20.04.2010 CN 201010153057
(43) Date of publication of application: 26.12.2012
(73) Proprietor: ZTE Corporation, Shenzhen, Guangdong 518057 (CN)
(72) Inventor: YAN, Xiangbiao, Guangdong 518057 (CN); JIANG, Hua, Guangdong 518057 (CN)
(74) Representative: Manitz Finsterwald Patentanwälte PartmbB
(86) International application number: PCT/CN2011/072681
(87) International publication number: WO 2011/131097

(56) References cited:
- CN-A- 1 801 764
- CN-A- 101 123 536
- HONG ZHANG ET AL: "Evaluating the Performance on ID/Loc Mapping", 2008 IEEE GLOBAL TELECOMMUNICATIONS CONFERENCE : [IEEE GLOBECOM 2008] ; NEW ORLEANS, LOUISIANA, 30 NOVEMBER 2008 - 04 DECEMBER 2008, IEEE, PISCATAWAY, NJ, USA, 30 November 2008 (2008-11-30), pages 1-5, XP031370121, ISBN: 978-1-4244-2324-8
- FARINACCI V FULLER D MEYER D LEWIS CISCO SYSTEMS D: "Locator/ID Separation Protocol (LISP); draft-farinacci-lisp-12.txt", LOCATOR/ID SEPARATION PROTOCOL (LISP); DRAFT-FARINACCI-LISP-12.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 12, 2 March 2009 (2009-03-02), XP015060559,
- LUIGI IANNONE ET AL: "On the cost of caching locator/ID mappings", CONEXT 2007, ACM, 2 PENN PLAZA, SUITE 701 NEW YORK NY 10121-0701 USA, 10 December 2007 (2007-12-10), pages 1-12, XP058272704, DOI: 10.1145/1364654.1364663 ISBN: 978-1-59593-770-4
- FARINACCI ET AL.: 'Locator/ID Separation Protocol (LISP) draft-farinacci-lisp-12.txt', [Online] no. 12, 02 March 2009, XP015060559 Retrieved from the Internet: <URL:http://tools.ietf.org/html/draft-farin acci-lisp-12>

## Description

### Technical Field

The present invention relates to the field of communications, and in particular, to a method, a system and an access service node for processing a data message in an Identity(ID)-locator-separation network.

### Background of the Related Art

3G and 4G are the research core for the Next Generation Network (NGN) in the wireless communications field, and is intended to improve the quality of the wireless mobile communication based on all-IP packet core network; the NGN and the Next-Generation Internet (NGI) are researches on NGN convergence in the telecommunication network and Internet fields respectively; China's Next Generation Internet (CNGI) is intended to construct an IPv6-based NGI. Although there is a considerable difference between various researches, a generally accepted view of the various researches is that the future network is a packet-based uniform bearer network. Therefore, the research on the NGN architecture will take the internet as a primary reference object. Internet has been developed at a top speed since its emergence, and has become the most successful, the most vigorous communications network, and its characteristics such as flexible scalability, efficient message switching, a powerful end etc. very conforms to requirements of the new NGN design. Therefore, Internet will be the main reference blueprint for the new generation network design. However , the structure of the Internet is far from optimal, and there are many important design issues, which are mainly manifested in the following aspects besides that the IP address space is unable to meet the application requirements.

The Internet was invented in the 1970s, and it was difficult for people to predict there would be a large number of mobile ends and multi-home ends in the world today, and therefore, the Internet protocol stack at that time was mainly designed for the end which is connected in a "fixed" manner. In the network environment at that time, as the end basically did not move from one position to another position, the transmitting address was the receiving address, and the path was reversible, the IP address with the dual attributes of ID and locator can work very well, and no conflict occurred between the ID attribute and the locator attribute of the IP address. The IP address representing the ID and locator precisely meets the network requirements at that time. From the network environment at that time, this design is simple and effective, which simplifies the protocol stack hierarchy. However, there is no doubt that an internal conflict exists between the ID attribute and locator attribute of the IP address. The ID attribute of the IP address requires any two IP addresses to be equal. Although the IP addresses can be allocated in accordance with the organization, there is no necessary relationship between the continuously-coded IP addresses, or there is no necessary relationship at least at a topological locator; the locator attribute of the IP address requires the IP addresses to be allocated based on a network topology (instead of the organization), and all IP addresses in the same subnet should be in a continuous IP address block, so that prefixes of the IP addresses in the network topology can be aggregated, thus reducing the entries of the routing table of a router device and ensuring the scalability of the routing system.

With the development of the network size and the technology, some technologies for allocating dynamically IP addresses, such as the Dynamic Host Configuration Protocol (DHCP) gradually emerge, which began to break the assumption that an IP address uniquely represents an end. The use of private IP address space and the birth of the Network Address Translator (NAT) technology make the situation even worse. In this case, the IP address having both the ID attribute and the locator attribute is difficult to play its role, and the dual attribute problem of the IP address has been prominent. Besides that the requirements at the technical level change significantly, the Internet users have also undergone tremendous change. In the first few years after the birth of the Internet, the Internet is basically shared by some mutually trusted personnel in the same group, and the traditional Internet protocol stack was designed based on this assumption; the current Internet users are quite a mixed bag, it is difficult to trust each other. In this case, the Internet without the built-in security mechanism also requires changing.

Overall, the inherent contradictions of the dual-attribute of the IP address will result in the following primary problems:
1. The problem of routing scalability. The scalability of the Internet routing system has a basic assumption:
   "Either the addresses are allocated according to the topology, or the topology is deployed according to the addresses". The ID attribute of the IP address requires that the IP addresses are allocated based on the organization (instead of the network topology) to which the end belongs, and this allocation needs to maintain a certain stability and cannot change frequently; the locator attribute of the IP address requires that the IP addresses are allocated based on the network topology, so as to ensure the scalability of the routing system. Thus, a conflict comes between the two attributes of the IP address, which finally leads to the scalability problem of the Internet routing system.
2. The problem of mobility. The ID attribute of the IP address requires that the IP address should not change with the end locator, so as to guarantee that the communication bound to the ID is not interrupted, and also guarantee that after the end moves, other ends can still use its ID to establish the communication connection with the end; while the locator attribute of the IP address requires that the IP address changes with the end locator, so that the IP addresses can aggregate in a new network topology; otherwise, the network must reserve a separate routing information for the moved end, resulting in the rapid increase of the routing table entries.
3. The problem of multi-home. Multi-home usually means that the ends or networks simultaneously access to the Internet via the networks of a plurality of Internet Service Providers (ISPs). The advantages of the multi-home technology comprise increasing the network reliability, supporting the traffic load balancing between multiple ISPs and improving the overall available bandwidth and so on. However, the internal contradiction of the dual attributes of the IP address makes the multi-home technique difficult to achieve. The ID attribute of the IP address requires that a multi-home end shows always the unchanged ID to other ends, no matter via how many ISPs the end accesses to the Internet; while the locator attribute of the IP address requires that a multi-home end uses different IP addresses to communicate in different ISP networks, so as to ensure that the end's IP address is able to aggregate in the ISP network topology.
4. Security and locator privacy problem. Since the IP address contains both the ID information and locator information of the end, the communication peer end and malicious eavesdroppers can obtain simultaneously the ID information and the topology locator information of the end based on the IP address of the end. Overall, since the system structure is established for the traditional Internet, the technology environment and user groups of the Internet have undergone enormous changes, and the Internet needs to be innovated. The problem of dual attributes of the IP address is one of the basic reasons troubling the Internet to continue to develop, and separating the ID attribute and the locator attribute of the IP address is a good idea to solve the problems faced by the Internet. The new network will be designed based on this idea, and a network architecture where the ID information is separated with the locator information is proposed to solve some serious drawbacks of the existing Internet.

In order to solve the problem of ID and locator, the industry makes a lot of researches and explorations, and the basic idea of all the ID and locator separation schemes is to separate the dual attributes, ID and locator, that are originally bound to the IP address. Among the schemes, some schemes use the Uniform Resource Locator (URL, which is an identification method used to completely describe the addresses of Web pages and other resources in the Internet) in the application layer or the Fully Qualified Domain Name (FQDN) as the ID identifier of the end; some schemes introduce a new name space as the ID identifier, for example, the Host ID Protocol (HIP) adds a host identifier to the network layer which takes the IP address as the locator identifier; some schemes classify the IP addresses, in which, a part of the IPs are used as the ID identifier and a part of the IPs are used as the locator identifier, for example, the Locator/ID Separation Protocol (LISP).

Wherein, a relatively typical scheme is based on the network, and the core idea thereof is to divide the network into two parts, in which one part is a transmission network or a forwarding network, which is located in the center of the whole network; and the other part is an edge network or an access network, which is connected to the forwarding network through a switch router; wherein, address spaces and route information of the access network and the forwarding network are separated with each other.

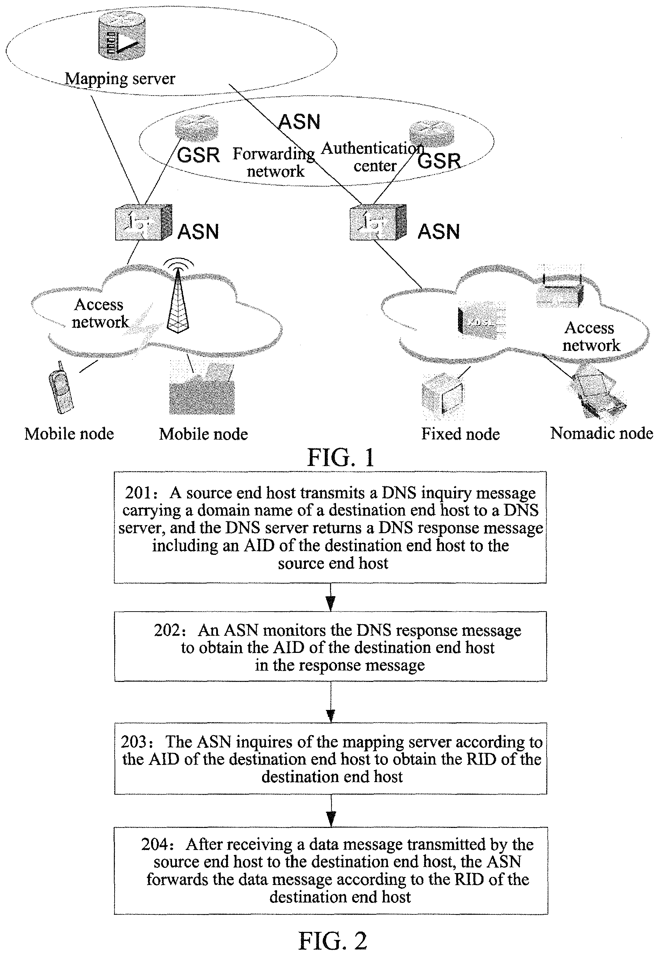

As shown in FIG. 1, in the network based ID and locator separation scheme, the dual functions of the traditional IP address are separated into an ID identifier and a locator identifier, wherein, the ID identifier is an ID attribute of an end host, and due to the function on the access network in the design of the scheme, it is also referred to as an Access ID (AID), which is used as an ID identifier of the end host, and the functional domain thereof is in the access network; and wherein, the locator identifier is a locator attribute of the end host, and due to the function on the forwarding network in the design of the scheme, it is used as a route of the forwarding network, the locator identifier is also referred to as a Route ID (RID), which is used as a route identifier of the end host, and the functional domain thereof is in the forwarding network; and the Access Service Node (ASN) completes the registration and inquiry of the AID and the RID of the mobile end on the mapping server.

When the mobile end initiates communication to a Correspondent Node (CN), a locator inquiring process is initiated by the ASN thereof to an ID and locator mapping server, to inquiry and obtain current locator information of a destination end, and return the current locator information to the ASN of the source end, to ensure that the source end can initiate a communication connection correctly.

ASN: Access Service Node, which maintains a connection relationship between the mobile end and the network, allocates an RID to the mobile end, and processes location update for the switch of the end, processes registration of the locator information of the end, charging/authentication, maintenance/inquiry of an AID-RID mapping relationship of the CN.

The ASN encapsulates routes and forwards a data message transmitted by the end. When receiving a data message transmitted by the source end, the ASN inquires of an AID-RID mapping table in a local buffer table according to the AID of the CN in the data message, and if corresponding AIDc-RIDc mapping entries are found, the ASN encapsulates the RIDc in a head of the data message and forwards the RIDc to a forwarding network; and if corresponding AIDc-RIDc mapping entries are not found, initiates a process of inquiring an AIDc-RIDc mapping relationship to a mapping forwarding plane.

GSR: General Switch Router, which routes and forwards a data message with the RID being a destination address.

The main functions of the forwarding network are to route and forward the data message according to the RID in the data message.

The main functions of the mapping server are to store the AID-RID mapping information of a mobile node, process the process of registration of the mobile node, and process the process of inquiring the locator of the CN.

The above scheme has the following problems.

The triggering condition of the ASNs of the source end initiating a locator inquiring process is that the end " initiates a communication". In the process of initiating the communication, the ASNs of the source end may need to perform the process of inquiring the locator of the CN, and at this time, there is no mapping relationship between the locator and the ID of the CN in the ASNs of the source end, i.e., entries of the RIDs-AIDc mapping table of the opposite end, and the data message cannot be forwarded according to the route of the RIDc. According to different network transmission conditions and cell locators, the process of inquiring the locator of the CN which is initiated by the ASNs of the source end may continue for a few hundred milliseconds to a few seconds.

In such conditions, the ASN receives the data message which is transmitted by the end to the opposite end, initiates the inquiring of the mapping information of the opposite end, and waits for the mapping server to return mapping information of the opposite end, and the ASNs must buffer the received data message, which consumes a lot of resources, and the longer the time to be waited, the larger the amount of the data to be buffered, which consequentially influence the performance of the normal forwarding; and meanwhile, there is also hidden trouble in terms of security, which may easily form attacks on the mapping server.

The document HONG ZHANG et al. "Evaluating the Performance on ID/Loc MAPPING" IEEE GLOBECOM 2008, ISBN: 978-1-4244-2324-8, discloses a canonical model as the typical case where the mapping query is executed for routers performing the LD/Loc mappings. Thus a well-defined mapping service is able to handle the traffic volume that a current big provider may experience.

The document FARINACCI V FULLER D MEYER D LEWIS CISCO SYSTEM D "Locator/ID Separation Protocol (LISP); draft-farinacci-lisp-12.txt", IETF, ISOC 4, no. 12, 2 March 2009, XP015060559, discloses a simple, incremental, network-based protocol to implement separation of Internet addresses into Endpoint Identifiers and Routing Locators. The mechanism requires no changes to host stacks and no major changes to existing database infrastructures.

### Summary of the Invention

The present invention is defined in the independent claims.

It is provided a method for processing a data message, wherein, the method is implemented based on an ID-locator-separation network, and a Domain Name System (DNS) server is used to store a corresponding relationship between a domain name and an AID of an end host, and the method comprises:
A. a source end host transmitting a DNS inquiry message carrying a domain name of a destination end host to a DNS server, and the DNS server returning a DNS response message including an AID of the destination end host to the source end host;
B. an Access Service Node (ASN) monitoring the DNS response message to obtain the AID of the destination end host in the response message;
C. the ASN inquiring of a mapping server according to the AID of the destination end host to obtain an RID of the destination end host; and
D. after receiving a data message transmitted by the source end host to the destination end host, the ASN forwarding the data message according to the RID of the destination end host.

Preferably, in step B, the ASN monitors the DNS response message from a received forwarding network message by the following way: determining whether the received forwarding network message is a DNS response message according to a DNS message format, a DNS port number, a DNS AID or a DNS RID.

Preferably, in step A, the DNS inquiry message is forwarded to the DNS server through the ASN; the method further comprises: after obtaining an the AID of the destination end host from the DNS response message, the ASN forwarding the DNS response message to the source end host; and the source end host transmitting the data message to the destination end host according to the AID of the destination end host in the DNS response message.

Preferably, in step C, the ASN inquires of a local buffer first before inquiring of the mapping server, and if there is no mapping relationship between the AID and the RID of the destination end host in the local buffer, transmits a mapping inquiry request to the mapping server, obtains the RID of the destination end host according to a mapping inquiry response of the mapping sever, and buffers the mapping relationship between the AID and the RID of the destination end host.

Preferably, in step D, after receiving the data message transmitted by the source end host to the destination end host, the ASN first inquires of a local buffer, and if there is no mapping relationship between the AID and the RID of the destination end host in the local buffer or the mapping relationship between the AID and the RID of the destination end host is being inquired , forwards the data message after waiting for receiving a mapping inquiry response of the mapping server.

Preferably, in step D, the ASN implements the forwarding of the data message with an encapsulation way or a substitution way.

Preferably, in step D, a source address and a destination address in the data message transmitted by the source end host are the AIDs of the source end host and the destination end host respectively; the method further comprises: when forwarding the data message, the ASN encapsulating the data message transmitted by the source end host using the RIDs of the source end host and the destination end host, wherein, a source address and a destination address of the encapsulated data message are RIDs of the source end host and the destination end host respectively, and the encapsulated message further comprises the AIDs of the source end host and the destination end host.

Preferably, in step D, the source address and the destination address of the data message transmitted by the source end host are AIDs of the source end host and the destination end host respectively; the method further comprises: when forwarding the data message, the ASN substituting the AIDs of the source end host and the destination end host with the RIDs of the source end host and the destination end host respectively, wherein, the AID and the RID of the source end host correspond to each other uniquely, and the AID and the RID of the destination end host correspond with each other uniquely.

It is provided an access service node, wherein, the Access Service Node (ASN) is located in an ID-locator-separation network which comprises a DNS server, the DNS server is configured to store a corresponding relationship between a domain name and an AID of an end host, receive a DNS inquiry message carrying a domain name of a destination end host which is transmitted by a source end host, and return a DNS response message carrying an AID of the destination end host to the source end host, and the ASN comprises:
a monitoring module, connected to a message processing module, and configured to monitor the DNS response message to obtain an AID of the destination end host, in the response message;
a mapping inquiring module, connected to the monitoring module, and configured to inquire of a mapping server according to the AID of the destination end host which is obtained by the monitoring module to obtain an RID of the destination end host; and
a message processing module, connected to the mapping inquiring module and the monitoring module, and configured to receive a data message transmitted by the source end host to the destination end host, and forward the data message according to the RID obtained by the mapping inquiring module; and receive and forward a message transmitted from a forwarding network to the source end host under the ASN.

Preferably, the monitoring module of the ASN is configured to monitor the DNS response message from a forwarding network message received by the message processing module by the following way: determining whether the received forwarding network message is a DNS response message according to a DNS message format, a DNS port number, a DNS AID or a DNS RID.

Preferably, the message processing module is further configured to receive and forward the DNS inquiry message transmitted by the source end host to the DNS server, and the DNS response message transmitted by the DNS server to the source end host.

Preferably, the ASN further comprises a mapping information buffering module connected to the mapping inquiring module, and configured to buffer a mapping relationship between an AID and an RID of the end host; and the mapping inquiring module is configured to obtain the RID of the destination end host by the following way: inquiring of the mapping information buffering module first before inquiring of the mapping server, and if there is no mapping relationship between the AID and the RID of the destination end host in the mapping information buffering module, transmitting a mapping inquiry request to the mapping server, and obtaining the RID of the destination end host according to a mapping inquiry response of the mapping sever; and the mapping inquiring module is further configured to store the mapping relationship between the AID and the RID of the destination end host in the mapping information buffering module.

Preferably, the message processing module of the ASN is configured to forward the data message by the following way: after receiving the data message transmitted by the source end host to the destination end host, notifying the mapping inquiring module to inquire of the mapping information buffering module, and if there is no mapping relationship between the AID and the RID of the destination end host in the mapping information buffering module, forwarding the data message after waiting for the mapping inquiring module receiving a mapping inquiry response of the mapping server.

Preferably, the message processing module of the ASN is configured to implement the forwarding of the data message with an encapsulation way or a substitution way.

It is provided a system for processing a data message, wherein, the system for processing a data message is implemented based on an ID-locator-separation network, and the system comprises an end host, an Access Service Node (ASN) and a Domain Name System (DNS) server, wherein,
the end host comprises a domain name inquiring module and a message receiving/transmitting module, wherein, the domain name inquiring module is configured to transmit a DNS inquiry message carrying a domain name of a destination end host to the DNS server, and receive a DNS response message carrying an AID of the destination end host returned by the DNS server; and the message receiving/transmitting module is configured to transmit the data message to the destination end host according to the AID of the destination end host in the DNS response message, and receive the data message;
the ASN comprises:
a monitoring module, connected to a message processing module, and configured to monitor the DNS response message to obtain an AID of the destination end host in the response message;
a mapping inquiring module, connected to the monitoring module, and configured to inquire of a mapping server according to the obtained AID of the destination end host to obtain an RID of the destination end host; and
a message processing module, connected to the mapping inquiring module and the monitoring module, and configured to receive a data message transmitted by the source end host to the destination end host, and forward the data message according to the RID obtained by the mapping inquiring module; and receive and forward a message transmitted from a forwarding network to the source end host under the ASN; and
the DNS server is configured to store a corresponding relationship between a domain name and an AID of an end host, receive a DNS inquiry message transmitted by the end host and return the DNS response message to the end host.

Preferably, the monitoring module of the ASN is configured to monitor the DNS response message from a forwarding network message received by the message processing module by the following way: determining whether the received forwarding network message is a DNS response message according to a DNS message format, a DNS port number, a DNS AID or a DNS RID.

Preferably, the message processing module is further configured to receive and forward the DNS inquiry message transmitted by the source end host to the DNS server, and the DNS response message transmitted by the DNS server to the source end host.

Preferably, the ASN further comprises a mapping information buffering module connected to the mapping inquiring module, and configured to buffer a mapping relationship between an AID and an RID of the end host; and the mapping inquiring module is configured to obtain the RID of the destination end host by the following way: inquiring of the mapping information buffering module first before inquiring of the mapping server, and if there is no mapping relationship between the AID and the RID of the destination end host in the mapping information buffering module, transmitting a mapping inquiry request to the mapping server, obtaining the RID of the destination end host according to a mapping inquiry response of the mapping sever; and the mapping inquiring module is further configured to store the mapping relationship between the AID and the RID of the destination end host in the mapping information buffering module.

Preferably, the message processing module of the ASN is configured to forward the data message by the following way: after receiving the data message transmitted by the source end host to the destination end host, notifying the mapping inquiring module to inquire from the mapping information buffering module, and if there is no mapping relationship between the AID and the RID of the destination end host in the mapping information buffering module, forwarding the message after waiting for the mapping inquiring module receiving a mapping inquiry response of the mapping server.

Preferably, a source address and a destination address in the data message transmitted by the source end host and received by the message processing module of the ASN are the AIDs of the source end host and the destination end host respectively, the message processing module is further configured to when forwarding the data message, encapsulate the data message transmitted by the source end host using the RIDs of the source end host and the destination end host, wherein, the source address and the destination address of the encapsulated data message are RIDs of the source end host and the destination end host respectively, and the encapsulated message further comprises AIDs of the source end host and the destination end host.

Preferably, the source address and the destination address of the data message transmitted by the source end host and received by the message processing module of the ASN are AIDs of the source end host and the destination end host respectively; the message processing module is further configured to when forwarding the data message, substitute the AIDs of the source end host and the destination end host with the RIDs of the source end host and the destination end host respectively, wherein, the AID and the RID of the source end host correspond to each other uniquely, and the AID and the RID of the destination end host correspond with each other uniquely.

The method, the access service node and the system for processing a data message according to the present invention is based on the ID-locator-separation network architecture. When an ASN inquires of a DNS according to a source end host before receiving a data message transmitted by the source end host, the message returned by the DNS monitors an AID of a destination end host, and inquires an AID-RID mapping information from a mapping server, thus enhancing the efficiency of forwarding the data message of the source end host, and improving the forwarding performance.

### Brief Description of Drawings

FIG. 1 is a diagram of a constitution of the ID-locator-separation network architecture;
FIG. 2 is a diagram of a flowchart of a method for processing a data message according to the present invention;
FIG. 3 is a diagram of a modular structure of an ASN according to the present invention; and
FIG. 4 is a diagram of a modular structure of a system for processing a data message according to the present invention.

### Preferred Embodiments of the Present Invention

The main idea of the method, the access service node and the system for processing a data message according to the present invention is based on the ID-locator-separation network architecture. When an ASN inquires of a DNS according to a source end host before receiving a data message transmitted by the source end host, the message returned by the DNS monitors an AID of a destination end host, and inquires the AID-RID mapping information of a mapping server, thus enhancing the efficiency of forwarding the data message of the source end host, and improving the forwarding performance.

The ID-locator-separation network architecture described in the present invention separates dual functions identifying ID and locator of the IP address of the traditional internet, thus supporting the issues such as mobility, multi-home, IP address dynamical re-allocation, reduction of routing load, and interaction between different network areas in the NGI, and so on.

The ID and locator separation architecture network has the following features: the network being divided into an access network and a forwarding network, wherein, the access network is located at an edge of the forwarding network, and is responsible for the access of all ends. The forwarding network is responsible for the routing of different ends which access through the access network. The ASN is located at a cut-off point between the forwarding network and the access network, and has an interface to the access network and an interface to the forwarding network. The access network and the forwarding network do not overlap in the relationship of the topology. The commutation between user ends only needs to be identified using an ID identifier of the opposite end, and the ID identifier is also referred to as an access identifier in the access network. The ASN provides an access service to the end, maintains a user's connection, and forwards user data.

FIG. 2 is a flowchart of a method for processing a data message according to an embodiment of the present invention, and the flow of processing a data message according to the present invention comprises:
In 201, a source end host transmits a DNS inquiry message carrying a domain name of a destination end host to a DNS server according to the domain name of the destination end host to be accessed, and the DNS server returns a DNS response message including an AID of the destination end host to the source end host;

A corresponding relationship between the domain name of the end host and the IP address is stored in the traditional DNS server, and in the ID-locator-separation network according to the present invention, the corresponding relationship between the domain name of the end host and the AID (i.e., ID attribute of the end host) is stored in the DNS server, and meanwhile, the DNS sever has its own AID and RID in the ID-locator-separation network.

When the source end host is in communication with the destination end host, the source end host inquires of the DNS server according to the domain name of the destination end host using a DNS client protocol, to obtain the AID of the destination end host, and the DNS server returns a response message including the AID of the destination end host, and the source ASN monitors the response message to obtain the AID of the destination end host.

The AID of the DNS sever is a common general address which is set by the system, and the transmission of the DNS inquiry message transmitted by the source end host and the DNS response message returned by the server must pass through the ASN.

The message format of the DNS is as follows:

| | |
|---|---|
| Identifier | Flag |
| problem number | resource record number |
| authorized resource record number | additional resource record number |
| inquiry problems | |
| response (resource record number variable) | |
| authorization (resource record number variable) | |
| additional information (resource record number variable) | |

wherein,
the identifier field is used to identify the message and set the end, the DNS server uses the identifier to return results;
the flag field is 16 bits, and important bit fields are defined as follows:

| Bit number | Name | Description |
|---|---|---|
| 1 bit | QR | 0 indicates an inquiry message |
| | | 1 indicates a response message |
| 4 bits | Opcode | 0 indicates a standard inquiry |
| 1 bit | AA | Indicate an authorization response |
| 1 bit | TC | Indicate that it can be cut off |
| 4 bit | Rcode | Return code, 0 indicates that there is no error |

There is usually only one problem in the problem part in the DNS inquiry message, and the format comprises an inquiring name, an inquiring type, and an inquiring class, and the inquiring name is the domain name which is needed to be inquired, such as "ZTE.COM.CN". The inquiring class being 1 indicates the internet address IP, which is the AID in the present invention.

The resource recording in the DNS response message is at the last three fields in the DNS message format, and the response field, the authorization field and the additional field use the following resource record format:

| Domain name | Type | Class |
|---|---|---|
| survival time | length of the resource data | resource data |

wherein, the domain name is a name corresponding to the resource data in the record, and the format thereof is the same as that of the former inquiring name.

The type code of the type description RR is the same as the former inquiring type value, and typically is 1, which indicates internet data.

The survival time is the number of seconds for which a client program reserves the resource record, and normally, the survival time of the resource record is 2 days.

The length of the resource data indicates the amount of the resource data, and the format of the data depends on the value of the domain type field, and for type A, the resource data is an IP address with 4 bytes (and is the AID in the present invention).

In 202, an ASN monitors the DNS response message to obtain the AID of the destination end host in the response message;

The ASN monitors the DNS response message from the received forwarding network message (in the present invention, the message transmitted by the forwarding network is referred to as the forwarding network message), determines whether the message is a response message of the DNS, and if the message is a response message of the DNS, extracts an AID of the destination end host in the DNS response message in real-time to complete the monitoring function, and forwards the DNS response message to the source end host, and after receiving the DNS response message, the source end host generates a data message with the destination address being the AID of the destination end host, and transmits the data message to the ASN of the source end.

The ASN can determine whether the received message is a SNS response message according to the following three ways:
1. The ASN determines whether the received message is a SNS response message according to the above-described message format of the DNS;
2. The DNS supports both the User Data Packet protocol (UDP) and the Transport Control Protocol (TCP), and use particular port numbers, for example, the port number of the DNS is 53, the destination port number of the DNS inquiry message is 53, and the source port number of the DNS response message is 53, and the ASN determines whether the received message is a DNS response message according to the source port number; and
3. The DNS has particular AID and RID, and the ASN determines whether the received message is a DNS response message according to the AID or the RID in the source end address.

In 203, the ASN obtains the RID of the destination end host according to the AID of the destination end host.

If there is a mapping relationship in a local buffer of the ASN, the ASN obtains the AID of the destination end host and then first inquires the locally buffered mapping relation, and if the mapping relationship of the destination end host is not found in the local buffer, the ASN transmits a mapping inquiry request to the mapping server of the ID-locator-separation network, and obtains the RID of the destination end host according to the mapping inquiry response of the mapping server, and buffers and stores the AID-RID mapping relationship of the destination end host locally according to the RID of the destination end host returned by the mapping server; and

if there is no mapping relationship stored in the local buffer of the ASN, the ASN obtains the AID of the destination end host and then inquires the RID of the destination end host of the mapping server.

When the ASN inquires the RID of the destination end host from the mapping server, the AID of the destination end host is carried in the inquiry request, and the ASN inquires the mapping information of the mapping server of the ID-locator-separation network, i.e., the locator RID of the ASN to which the destination end host belongs.

In 204, after receiving a data message transmitted by the source end host to the destination end host, the ASN forwards the data message according to the RID of the destination end host.

There is a certain time difference between the receiving of the data message and the obtaining of the RID returned by the mapping server, and in most cases, the data message of the end is first received, and in such cases, the local buffer is first inquired of, and if there is no AID-RID mapping relationship of the destination end host in the local buffer or the AID-RID mapping relationship of the destination end host is being inquired, the data message is buffered, and after waits for receiving the mapping inquiry response, the message is forwarded. If the mapping information returned by the mapping server is first received, no matter whether the data message of the end is received, the RID should be buffered into a local mapping table immediately, and thus, after receiving the data message of the end, the ASN can directly perform local inquiry.

The source address and the destination address in the data message transmitted by the source end host are AIDs of the source end host and the destination end host respectively, and after receiving the data message transmitted by the source end host to the destination end host, the ASN inquires of the local buffer according to the AID of the destination end host in the data message to obtain the RID of the destination end host, and forwards the data message according to the RID of the destination end host.

There are two ways to forward the data message as follows:

### (1) Forwarding by encapsulation

The source Access Service Node ASNs encapsulate the data message using the inquired RID, and the source address and the destination address of the encapsulated data message are RIDs of the source end host and the destination end host respectively, and the encapsulated message further comprises the AIDs of the source end host and the destination end host; then the data message is transmitted to the destination Access Service Node ASNd through the forwarding network, and the ASNd de-encapsulates the data message and then transmits it to the destination end host.

### (2) Forwarding by substitution

The source Access Service Node ASNs substitutes the AID of the destination host in the data message with the inquired RID, and then transmits it to the destination Access Service Node ASNd through the forwarding network, and the ASNd substitutes the RID of the received data message with the AID and then transmits it to the destination end host.

It should be illustrated that in the condition of forwarding by substitution, the AID of the source end host corresponds to the RID allocated by the source ASN one by one, and similarly, the AID of the destination end host also corresponds to the RID allocated by the destination ASN one by one.

In the present invention, the AID of the destination end host is obtained in advance by the ASN monitoring the DNS response message, and in the condition that there is no mapping relationship of the destination end host buffered locally, the mapping server is inquired of in advance, thus reducing the buffering of the data message, reducing the size of the buffer, reducing the amount of the task of the data management, so that the ASN device has more resources to forward data, which improves the efficiency of process of forwarding the data.

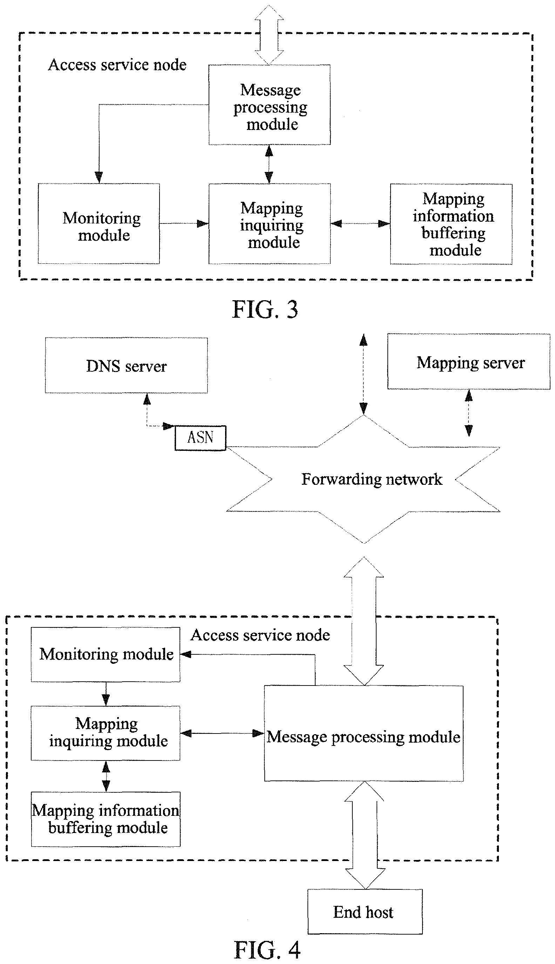

As shown in FIG. 3, in order to implement the above method, the present invention further provides an ASN, which is located in an ID-locator-separation network, the ID-location-separation network comprises: a DNS server, configured to store a corresponding relationship between the domain name and the AID of the end host, receive a DNS inquiry message carrying a domain name of the destination end host transmitted by the source end host, and return a DNS response message carrying an AID of the destination end host to the source end host.

The function of the ASN comprises: maintaining a connection relationship between the end and the network, allocating an RID to the end, and processing location update for the switch of the end, processing the registration of the end, charging/authentication, maintenance/inquiry of an AID-RID mapping relationship of the CN; and encapsulating, routing and forwarding the data message transmitted to or transmitted by the end. When receiving the data message transmitted by the end, the ASN inquires of an AID-RID mapping table in a local mapping table according to the AIDc of the CN in the data message, and if the corresponding AIDc-RIDc mapping entries are not found, initiates a process of initiating an AIDc-RIDc mapping relationship to the mapping server.

The ID-locator-separation network further comprises a General Switch Router (GSR), which routes and forwards a data message with an RID being a destination address.

Relatively to the present invention, the ASN comprises:
a monitoring module, connected to a message processing module, and configured to monitor the DNS response message to obtain an AID of the destination end host in the response message;
a mapping inquiring module, connected to the monitoring module, and configured to inquire of a mapping server according to the AID of the destination end host which is obtained by the monitoring module to obtain an RID of the destination end host; and
a message processing module, connected to the mapping inquiring module and the monitoring module, and configured to receive, process and forward a data message, a DNS inquiry message, a DNS response message, a mapping inquiry message and a mapping response message, and relatively to the present invention, the message processing module is configured to receive a data message transmitted by the source end host to the destination end host, and forward the data message according to the RID obtained by the mapping inquiring module; and receive and forward a message transmitted from a forwarding network to the source end host under the ASN.

Further, the monitoring module of the ASN monitors the DNS response message from a forwarding network message received by the message processing module and determines whether the received forwarding network message is a DNS response message according to a DNS message format, a DNS port number, a DNS AID or a DNS RID.

Further, the message processing module is further configured to receive and forward the DNS inquiry message transmitted by the source end host to the DNS server, and the DNS response message transmitted by the DNS server to the source end host.

Further, the ASN further comprises a mapping information buffering module connected to the mapping inquiring module, and configured to buffer a mapping relationship between an AID and an RID of the end host; the mapping inquiring module inquires of the mapping information buffering module first before inquiring of the mapping server, and if there is no mapping relationship between the AID and the RID of the destination end host in the mapping information buffering module, transmits a mapping inquiry request to the mapping server, and obtains the RID of the destination end host according to a mapping inquiry response of the mapping sever; and stores the mapping relationship between the AID and the RID of the destination end host in the mapping information buffering module.

Further, after receiving the data message transmitted by the source end host to the destination end host, the message processing module of the ASN notifies the mapping inquiring module to inquire of the mapping information buffering module, and if there is no mapping relationship between the AID and the RID of the destination end host in the mapping information buffering module, buffers the data message, and forwards the data message after waiting for the mapping inquiring module receiving a mapping inquiry response of the mapping server.

The message processing module of the ASN implements forwarding the data message by an encapsulation way or a substitution way, which is specifically described as above.

The present invention further provides a system for processing a data message, as shown in FIG. 4, which is implemented based on an ID-locator-separation system. The system comprises an end host, an ASN and a DNS server, wherein,
the end host comprises a domain name inquiring module and a message receiving/transmitting module, wherein, the domain name inquiring module is configured to transmit a DNS inquiry message carrying a domain name of a destination end host to the DNS server, and receive a DNS response message carrying an AID of the destination end host returned by the DNS server; and the message receiving/transmitting module is configured to transmit the data message to the destination end host according to the AID of the destination end host in the DNS response message, and receive the data message;
the ASN comprises:
a monitoring module, connected to a message processing module, and configured to monitor the DNS response message to obtain an AID of the destination end host in the response message;
a mapping inquiring module, connected to the monitoring module, and configured to inquire of a mapping server according to the AID of the destination end host which is obtained by the monitoring module to obtain an RID of the destination end host; and
a message processing module, connected to the mapping inquiring module and the monitoring module, and configured to receive, process and forward a data message, a DNS inquiry message, a DNS response message, a mapping inquiry message and a mapping response message, and relatively to the present invention, the message processing module is configured to receive a data message transmitted by the source end host to the destination end host, and forward the data message according to the RID obtained by the mapping inquiring module; and receive and forward a message transmitted from a forwarding network to the source end host under the ASN; and
the DNS server is configured to store a corresponding relationship between a domain name and an AID of an end host, receive a DNS inquiry message transmitted by the end host and return the DNS response message to the end host.

The monitoring module of the ASN monitors the DNS response message from a forwarding network message received by the message processing module, determines whether the received forwarding network message is a DNS response message according to a DNS message format, a DNS port number, a DNS AID or a DNS RID.

The message processing module is further configured to receive and forward the DNS inquiry message transmitted by the source end host to the DNS server, and the DNS response message transmitted by the DNS server to the source end host.

The ASN further comprises a mapping information buffering module connected to the mapping inquiring module, and configured to buffer a mapping relationship between an AID and an RID of the end host; and the mapping inquiring module inquires of the mapping information buffering module first before inquiring of the mapping server, and if there is no mapping relationship between the AID and the RID of the destination end host in the mapping information buffering module, transmits a mapping inquiry request to the mapping server, obtains the RID of the destination end host according to a mapping inquiry response of the mapping sever; and stores the mapping relationship between the AID and the RID of the destination end host in the mapping information buffering module.

After receiving the data message transmitted by the source end host to the destination end host, the message processing module of the ASN notifies the mapping inquiring module to inquire of the mapping information buffering module, and if there is no mapping relationship between the AID and the RID of the destination end host in the mapping information buffering module, buffers the data message therein, and forwards the message after waiting for the mapping inquiring module receiving a mapping inquiry response of the mapping server.

A source address and a destination address in the data message transmitted by the source end host and received by the message processing module of the ASN are the AIDs of the source end host and the destination end host respectively, and when forwarding the data message, the message processing module encapsulates the data message transmitted by the source end host using the RIDs of the source end host and the destination end host, wherein, the source address and the destination address of the encapsulated data message are RIDs of the source end host and the destination, end host respectively, and the encapsulated message further comprises AIDs of the source end host and the destination end host.

The source address and the destination address of the data message transmitted by the source end host and received by the message processing module of the ASN are AIDs of the source end host and the destination end host respectively; and when forwarding the data message, the message processing module substitutes the AIDs of the source end host and the destination end host with the RIDs of the source end host and the destination end host respectively, wherein, the AID and the RID of the source end host correspond with each other uniquely, and the AID and the RID of the destination end host correspond with each other uniquely.

If the data message transmitted by the source end ASN is an encapsulated data message, the destination end ASN de-encapsulates and restores the received data message; and if the data message transmitted by the source end ASN is a substituted data message, the destination end ASN substitutes and restores the received data message; i.e., the operation on the message by the destination end ASN is an inverse operation by the source end ASN.

Further, the ID-locator-separatiori network further comprises a mapping server, configured to return the RID to the ASN according to the inquiry of the ASN.

### Industrial Applicability

Compared with the prior art, the method, the access service node and the system for processing a data message according to the present invention are based on an ID-locator-separation network architecture. When an ASN inquires of a DNS according to a source end host first before receiving a data message transmitted by the source end host, the message returned by the DNS monitors an AID of a destination end host, and inquires an AID-RID mapping information of a mapping server, thus enhancing the efficiency of forwarding the data message of the source end host by the ASN, and improving the forwarding performance of the ASN.

## Claims

1. A method for processing a data message, wherein, the method is implemented based on an identity-locator-separation network, and a Domain Name System, DNS, server is used to store a corresponding relationship between a domain name and an Access Identifier, AID, of an end host, and the method comprises:
A. a source end host transmitting a DNS inquiry message carrying a domain name of a destination end host to a DNS server, and the DNS server returning a DNS response message including an AID of the destination end host to the source end host;
B. an Access Service Node, ASN, monitoring the DNS response message to obtain the AID of the destination end host in the monitored response message;
C. the ASN inquiring of a mapping server according to the AID of the destination end host to obtain a Router Identifier, RID, of the destination end host; and
D. after receiving a data message transmitted by the source end host to the destination end host, the ASN forwarding the data message according to the RID of the destination end host.

2. The method according to claim 1, wherein, in step B, the ASN monitors the DNS response message from a received forwarding network message by a following way: determining whether the received forwarding network message is a DNS response message according to a DNS message format, a DNS port number, a DNS AID or a DNS RID.

3. The method according to claim 1, wherein, in step A, the DNS inquiry message is forwarded to the DNS server through the ASN;
the method further comprises: after obtaining an the AID of the destination end host from the DNS response message, the ASN forwarding the DNS response message to the source end host; and the source end host transmitting the data message to the destination end host according to the AID of the destination end host in the DNS response message.

4. The method according to claim 1, wherein, in step D, the step of forwarding the data message according to the RID of the destination end host comprises: after receiving the data message transmitted by the source end host to the destination end host, the ASN first inquiring of a local buffer, and if there is no mapping relationship between the AID and the RID of the destination end host in the local buffer or the mapping relationship between the AID and the RID of the destination end host is being inquired, forwarding the data message after waiting for receiving a mapping inquiry response of the mapping server; or
in step D, the ASN implements the forwarding of the data message by an encapsulation way or a substitution way; or
in step D, a source address and a destination address in the data message transmitted by the source end host are the AIDs of the source end host and the destination end host respectively;
the method further comprises: when forwarding the data message, the ASN encapsulating the data message transmitted by the source end host using the RIDs of the source end host and the destination end host, wherein, a source address and a destination address of the encapsulated data message are RIDs of the source end host and the destination end host respectively, and the encapsulated message further comprises the AIDs of the source end host and the destination end host; or
the source address and the destination address of the data message transmitted by the source end host are AIDs of the source end host and the destination end host respectively;
the method further comprises: when forwarding the data message, the ASN substituting the AIDs of the source end host and the destination end host with the RIDs of the source end host and the destination end host respectively, wherein, the AID and the RID of the source end host correspond to each other uniquely, and the AID and the RID of the destination end host correspond with each other uniquely.

5. A method for processing a data message, wherein the method is implemented based on an identity-locator-separation network, and a Domain Name System, DNS, server is used to store a corresponding relationship between a domain name and an Access Identifier, AID, of an end host, and the method comprises:
A. a source end host transmitting a DNS inquiry message carrying a domain name of a destination end host to a DNS server, and the DNS server returning a DNS response message including an AID of the destination end host to the source end host;
B. an Access Service Node, ASN, monitoring the DNS response message to obtain the AID of the destination end host in the monitored response message;
C. the ASN inquiring according to the AID of the destination end host to obtain a Router Identifier, RID, of the destination end host; and
D. after receiving a data message transmitted by the source end host to the destination end host, the ASN forwarding the data message according to the RID of the destination end host;
wherein step C comprises: the ASN inquiring of a local buffer, and if there is no mapping relationship between the AID and the RID of the destination end host in the local buffer, transmitting a mapping inquiry request to the mapping server, obtaining the RID of the destination end host according to a mapping inquiry response of the mapping sever, and buffering the mapping relationship between the AID and the RID of the destination end host.

6. An access service node, wherein the Access Service Node, ASN, is located in an identity-locator-separation network which comprises a Domain Name System, DNS, server, the DNS server is configured to store a corresponding relationship between a domain name and an Access Identifier, AID, of an end host, receive a DNS inquiry message carrying a domain name of a destination end host which is transmitted by a source end host, and return a DNS response message carrying an AID of the destination end host to the source end host, and the ASN comprises:
a monitoring module, connected to a message processing module, and configured to monitor the DNS response message to obtain an AID of the destination end host in the monitored response message;
a mapping inquiring module, connected to the monitoring module, and configured to inquire of a mapping server according to the AID of the destination end host which is obtained by the monitoring module to obtain a Router Identifier, RID, of the destination end host; and
a message processing module, connected to the mapping inquiring module and the monitoring module, and configured to receive a data message transmitted by the source end host to the destination end host, and forward the data message according to the RID obtained by the mapping inquiring module; and receive and forward a message transmitted from a forwarding network to the source end host under the ASN.

7. The access service node according to claim 6, wherein the monitoring module is configured to monitor the DNS response message from a forwarding network message received by the message processing module by a following way: determining whether the forwarding network message received by the message processing module is a DNS response message according to a DNS message format, a DNS port number, a DNS AID or a DNS RID.

8. The access service node according to claim 6, wherein
the message processing module is further configured to receive and forward the DNS inquiry message transmitted by the source end host to the DNS server, and the DNS response message transmitted by the DNS server to the source end host.

9. The access service node according to claim 6, wherein the message processing module is configured to forward the data message by a following way: after receiving the data message transmitted by the source end host to the destination end host, notifying the mapping inquiring module to inquire of the mapping information buffering module, and if there is no mapping relationship between the AID and the RID of the destination end host in the mapping information buffering module, forwarding the message after waiting for the mapping inquiring module receiving a mapping inquiry response of the mapping server; or
the message processing module is configured to implement the forwarding of the data message by an encapsulation way or a substitution way.

10. An access service node, wherein the Access Service Node, ASN, is located in an identity-locator-separation network which comprises a Domain Name System, DNS, server, the DNS server is configured to store a corresponding relationship between a domain name and an Access Identifier, AID, of an end host, receive a DNS inquiry message carrying a domain name of a destination end host which is transmitted by a source end host, and return a DNS response message carrying an AID of the destination end host to the source end host, and the ASN comprises:
a monitoring module, connected to a message processing module, and configured to monitor the DNS response message to obtain an AID of the destination end host in the monitored response message;
a mapping inquiring module, connected to the monitoring module, and configured to inquire according to the AID of the destination end host which is obtained by the monitoring module to obtain a Router Identifier, RID, of the destination end host; and
a message processing module, connected to the mapping inquiring module and the monitoring module, and configured to receive a data message transmitted by the source end host to the destination end host, and forward the data message according to the RID obtained by the mapping inquiring module; and receive and forward a message transmitted from a forwarding network to the source end host under the ASN;
wherein the ASN further comprising a mapping information buffering module connected to the mapping inquiring module, and configured to buffer a mapping relationship between an AID and an RID of the end host;
wherein the mapping inquiring module is configured to obtain the RID of the destination end host by a following way: inquiring of the mapping information buffering module, and if there is no mapping relationship between the AID and the RID of the destination end host in the mapping information buffering module, transmitting a mapping inquiry request to the mapping server, and obtaining the RID of the destination end host according to a mapping inquiry response of the mapping sever; and
the mapping inquiring module is further configured to store the mapping relationship between the AID and the RID of the destination end host in the mapping information buffering module.

11. A system for processing a data message, wherein the system for processing a data message is implemented based on an identity-locator-separation network, and the system comprises an end host, an Access Service Node, ASN, and a Domain Name System, DNS, server, wherein
the end host comprises a domain name inquiring module and a message receiving/transmitting module, wherein, the domain name inquiring module is configured to transmit a DNS inquiry message carrying a domain name of a destination end host to the DNS server, and receive a DNS response message carrying an Access Identifier, AID, of the destination end host returned by the DNS server; and the message receiving/transmitting module is configured to transmit the data message to the destination end host according to the AID of the destination end host in the DNS response message, and receive the data message;
the ASN comprises:
a monitoring module, connected to a message processing module, and configured to monitor the DNS response message to obtain an AID of the destination end host in the monitored DNS response message;
a mapping inquiring module, connected to the monitoring module, and configured to inquire of a mapping server according to the AID of the destination end host which is obtained by the monitoring module to obtain a Router Identifier, RID, of the destination end host; and
a message processing module, connected to the mapping inquiring module and the monitoring module, and configured to receive a data message transmitted by the source end host to the destination end host, and forward the data message according to the RID obtained by the mapping inquiring module; and receive and forward a message transmitted from a forwarding network to the source end host under the ASN; and
the DNS server is configured to store a corresponding relationship between a domain name and an AID of an end host, receive a DNS inquiry message transmitted by the end host and return the DNS response message to the end host.

12. The system according to claim 11, wherein the monitoring module of the ASN is configured to monitor the DNS response message from a forwarding network message received by the message processing module by a following way: determining whether the received forwarding network message is a DNS response message according to a DNS message format, a DNS port number, a DNS AID or a DNS RID.

13. The system according to claim 11, wherein
the message processing module is further configured to receive and forward the DNS inquiry message transmitted by the source end host to the DNS server, and the DNS response message transmitted by the DNS server to the source end host.

14. The system according to claim 11, wherein the message processing module of the ASN is configured to forward the data message by a following way: after receiving the data message transmitted by the source end host to the destination end host, notifying the mapping inquiring module to inquire of the mapping information buffering module, and if there is no mapping relationship between the AID and the RID of the destination end host in the mapping information buffering module, forwarding the data message after waiting for the mapping inquiring module receiving a mapping inquiry response of the mapping server; or
a source address and a destination address in the data message transmitted by the source end host to the destination end host are the AIDs of the source end host and the destination end host respectively,
the message processing module is further configured to when forwarding the data message, encapsulate the data message transmitted by the source end host using the RIDs of the source end host and the destination end host, wherein, the source address and the destination address of the encapsulated data message are RIDs of the source end host and the destination end host respectively, and the encapsulated message further comprises AIDs of the source end host and the destination end host; or
the source address and the destination address of the data message transmitted by the source end host and received by the message processing module of the ASN are AIDs of the source end host and the destination end host respectively;
the message processing module is further configured to when forwarding the data message, substitute the AIDs of the source end host and the destination end host with the RIDs of the source end host and the destination end host respectively, wherein, the AID and the RID of the source end host correspond to each other uniquely, and the AID and the RID of the destination end host correspond with each other uniquely.

15. A system for processing a data message, wherein, the system for processing a data message is implemented based on an identity-locator-separation network, and the system comprises an end host, an Access Service Node, ASN, and a Domain Name System, DNS, server, wherein,
the end host comprises a domain name inquiring module and a message receiving/transmitting module, wherein, the domain name inquiring module is configured to transmit a DNS inquiry message carrying a domain name of a destination end host to the DNS server, and receive a DNS response message carrying an Access Identifier, AID, of the destination end host returned by the DNS server; and the message receiving/transmitting module is configured to transmit the data message to the destination end host according to the AID of the destination end host in the DNS response message, and receive the data message;
the ASN comprises:
a monitoring module, connected to a message processing module, and configured to monitor the DNS response message to obtain an AID of the destination end host in the monitored DNS response message;
a mapping inquiring module, connected to the monitoring module, and configured to inquire according to the AID of the destination end host which is obtained by the monitoring module to obtain a Router Identifier, RID, of the destination end host; and
a message processing module, connected to the mapping inquiring module and the monitoring module, and configured to receive a data message transmitted by the source end host to the destination end host, and forward the data message according to the RID obtained by the mapping inquiring module; and receive and forward a message transmitted from a forwarding network to the source end host under the ASN; and
the DNS server is configured to store a corresponding relationship between a domain name and an AID of an end host, receive a DNS inquiry message transmitted by the end host and return the DNS response message to the end host;
wherein the ASN further comprises a mapping information buffering module connected to the mapping inquiring module, and configured to buffer a mapping relationship between an AID and an RID of the end host;
wherein the mapping inquiring module is configured to obtain the RID of the destination end host by a following way: inquiring of the mapping information buffering module, and if there is no mapping relationship between the AID and the RID of the destination end host in the mapping information buffering module, transmitting a mapping inquiry request to the mapping server, obtaining the RID of the destination end host according to a mapping inquiry response of the mapping sever; and
the mapping inquiring module is further configured to store the mapping relationship between the AID and the RID of the destination end host in the mapping information buffering module.

## Patentansprüche

1. Verfahren zum Verarbeiten einer Datenbotschaft, wobei das Verfahren auf der Grundlage eines Identity Locator Separation Netzwerks implementiert wird und ein Domänennamensystem-Server DNS-Server verwendet wird, um eine entsprechende Beziehung zwischen einem Domänennamen und einer Zugriffskennung AID eines Endhosts zu speichern, und wobei das Verfahren umfasst, dass:
A. ein Quellen-Endhost eine DNS-Anfragebotschaft, die einen Domänennamen eines Ziel-Endhosts trägt, an einen DNS-Server überträgt, und der DNS-Server eine DNS-Antwortbotschaft, die eine AID des Ziel-Endhosts enthält, an den Quellen-Endhost zurückgibt;
B. ein Zugriffsdienstknoten ASN die DNS-Antwortbotschaft überwacht, um die AID des Ziel-Endhosts in der überwachten Antwortbotschaft zu beschaffen;
C. der ASN eine Zuordnungsserver nach der AID des Ziel-Endhosts fragt, um eine Routerkennung RID des Ziel-Endhosts zu beschaffen; und
D. der ASN nach Empfang einer Datenbotschaft, die von dem Quellen-Endhost an den Ziel-Endhost übertragen wird, die Datenbotschaft in Übereinstimmung mit der RID des Ziel-Endhosts weiterleitet.

2. Verfahren nach Anspruch 1, wobei der ASN in Schritt B die DNS-Antwortbotschaft von einer empfangenen Botschaft eines Weiterleitungsnetzwerks auf folgende Weise überwacht: Bestimmen, ob die empfangene Botschaft des Weiterleitungsnetzwerks eine DNS-Antwortbotschaft in Übereinstimmung mit einem DNS-Botschaftsformat, einer DNS-Portnummer, einer DNS AID oder einer DNS RID ist.

3. Verfahren nach Anspruch 1, wobei in Schritt A die DNS-Anfragebotschaft durch den ASN an den DNS-Server weitergeleitet wird;
wobei das Verfahren ferner umfasst, dass: der ASN nach dem Beschaffen der AID des Ziel-Endhosts aus der DNS-Antwortbotschaft die DNS-Antwortbotschaft an den Quellen-Endhost weiterleitet; und der Quellen-Endhost die Datenbotschaft in Übereinstimmung mit der AID des Ziel-Endhosts in der DNS-Antwortbotschaft an den Ziel-Endhost überträgt.

4. Verfahren nach Anspruch 1, wobei in Schritt D der Schritt des Weiterleitens der Datenbotschaft in Übereinstimmung mit der RID des Ziel-Endhosts umfasst, dass: der ASN nach Empfangen der Datenbotschaft, die von dem Quellen-Endhost an den Ziel-Endhost übertragen wird, zuerst einen lokalen Puffer abfragt, und wenn es in dem lokalen Puffer keine Zuordnungsbeziehung zwischen der AID und der RID des Ziel-Endhosts gibt oder die Zuordnungsbeziehung zwischen der AID und der RID des Ziel-Endhosts gerade abgefragt wird, nach Warten auf den Empfang einer Zuordnungsanfrageantwort des Zuordnungsservers die Datenbotschaft weiterleitet; oder
in Schritt D der ASN das Weiterleiten der Datenbotschaft mithilfe einer Verkapselung oder einer Ersetzung implementiert; oder
in Schritt D eine Quellenadresse und eine Zieladresse in der Datenbotschaft, die von dem Quellen-Endhost übertragen wird, die AIDs des Quellen-Endhosts bzw. des Ziel-Endhosts sind;
wobei das Verfahren ferner umfasst, dass: der ASN, wenn die Datenbotschaft weitergeleitet wird, die Datenbotschaft, die von dem Quellen-Endhost übertragen wird, unter Verwendung der RIDs des Quellen-Endhosts und des Ziel-Endhosts einkapselt, wobei eine Quellenadresse und eine Zieladresse der eingekapselten Datenbotschaft jeweils RIDs des Quellen-Endhosts bzw. des Ziel-Endhosts sind und die eingekapselte Botschaft ferner die AIDs des Quellen-Endhosts und des Ziel-Endhosts umfasst; oder
die Quellenadresse und die Zieladresse der Datenbotschaft, die von dem Quellen-Endhost übertragen wird, jeweils AIDs des Quellen-Endhosts bzw. des Ziel-Endhosts sind;
wobei das Verfahren ferner umfasst, dass: wenn die Datenbotschaft weitergeleitet wird, der ASN die AIDs des Quellen-Endhosts und des Ziel-Endhosts jeweils durch die RIDs des Quellen-Endhosts bzw. des Ziel-Endhosts ersetzt, wobei die AID und die RID des Quellen-Endhosts einander eindeutig entsprechen und die AID und die RID des Ziel-Endhosts einander eindeutig entsprechen.

5. Verfahren zum Verarbeiten einer Datenbotschaft, wobei das Verfahren auf der Grundlage eines Identity Locator Separation Netzwerks implementiert wird und ein Domänennamensystem-Server DNS-Server verwendet wird, um eine entsprechende Beziehung zwischen einem Domänennamen und einer Zugriffskennung AID eines Endhosts zu speichern, und wobei das Verfahren umfasst, dass:
A. ein Quellen-Endhost eine DNS-Anfragebotschaft, die einen Domänennamen eines Ziel-Endhosts trägt, an einen DNS-Server überträgt, und der DNS-Server eine DNS-Antwortbotschaft, die eine AID des Ziel-Endhosts enthält, an den Quellen-Endhost zurückgibt;
B. ein Zugriffsdienstknoten ASN die DNS-Antwortbotschaft überwacht, um die AID des Ziel-Endhosts in der überwachten Antwortbotschaft zu beschaffen;
C. der ASN nach der AID des Ziel-Endhosts fragt, um eine Routerkennung RID des Ziel-Endhosts zu beschaffen; und
D. der ASN nach Empfang einer Datenbotschaft, die von dem Quellen-Endhost an den Ziel-Endhost übertragen wird, die Datenbotschaft in Übereinstimmung mit der RID des Ziel-Endhosts weiterleitet;
wobei Schritt C umfasst, dass: der ASN einen lokalen Puffer abfragt, und wenn es keine Zuordnungsbeziehung zwischen der AID und der RID des Ziel-Endhosts in dem lokalen Puffer gibt, eine Zuordnungsanfrageanforderung an den Zuordnungsserver überträgt, die RID des Ziel-Endhosts in Übereinstimmung mit einer Zuordnungsanfrageantwort des Zuordnungsservers beschafft und die Zuordnungsbeziehung zwischen der AID und der RID des Ziel-Endhosts puffert.

6. Zugriffsdienstknoten, wobei sich der Zugriffsdienstknoten ASN in einem Identity Locator Separation Netzwerk befindet, welches einen Domänennamensystem-Server DNS-Server umfasst, wobei der DNS-Server ausgestaltet ist, um eine entsprechende Beziehung zwischen einem Domänennamen und einer Zugriffskennung AID eines Endhosts zu speichern, eine DNS-Anfragebotschaft zu empfangen, die einen Domänennamen eines Ziel-Endhosts trägt, der von einem Quellen-Endhost übertragen wird, und um eine DNS-Antwortbotschaft, die eine AID des Ziel-Endhosts trägt, an den Quellen-Endhost zurückzugeben, und wobei der ASN umfasst:
ein Überwachungsmodul, das mit einem Botschaftenverarbeitungsmodul verbunden ist und ausgestaltet ist, um die DNS-Antwortbotschaft zu überwachen, um eine AID des Ziel-Endhosts in der überwachten Antwortbotschaft zu beschaffen;
ein Zuordnungsanfragemodul, das mit dem Überwachungsmodul verbunden ist und ausgestaltet ist, um einen Zuordnungsserver nach der AID des Ziel-Endhosts zu fragen, die von dem Überwachungsmodul beschafft wird, um eine Routerkennung RID des Ziel-Endhosts zu beschaffen; und
ein Botschaftenverarbeitungsmodul, das mit dem Zuordnungsanfragemodul und dem Überwachungsmodul verbunden ist und ausgestaltet ist, um eine Datenbotschaft zu empfangen, die von dem Quellen-Endhost an den Ziel-Endhost übertragen wird, und um die Datenbotschaft in Übereinstimmung mit der RID weiterzuleiten, die durch das Zuordnungsanfragemodul beschafft wird; und um eine Botschaft, die von einem Weiterleitungsnetzwerk an den Quellen-Endhost unter dem ASN übertragen wird, zu empfangen und weiterzuleiten.

7. Zugriffsdienstknoten nach Anspruch 6, wobei das Überwachungsmodul ausgestaltet ist, um die DNS-Antwortbotschaft von einer Weiterleitungsnetzwerkbotschaft, die von dem Botschaftenverarbeitungsmodul empfangen wurde, auf folgende Weise zu überwachen: Bestimmen, ob die Weiterleitungsnetzwerkbotschaft, die von dem Botschaftenverarbeitungsmodul empfangen wird, eine DNS-Antwortbotschaft ist, in Übereinstimmung mit einem DNS-Botschaftsformat, einer DNS-Portnummer, einer DNS AID oder einer DNS RID.

8. Zugriffsdienstknoten nach Anspruch 6, wobei
das Botschaftenverarbeitungsmodul ferner ausgestaltet ist, um die DNS-Anfragebotschaft, die von dem Quellen-Endhost an den DNS-Server übertragen wird, zu empfangen und weiterzuleiten, und um die DNS-Antwortbotschaft, die von dem DNS-Server an den Quellen-Endhost übertragen wird, zu empfangen und weiterzuleiten.

9. Zugriffsdienstknoten nach Anspruch 6, wobei das Botschaftenverarbeitungsmodul ausgestaltet ist, um die Datenbotschaft auf folgende Weise weiterzuleiten: nach Empfang der Datenbotschaft, die von dem Quellen-Endhost an den Ziel-Endhost übertragen wird, Informieren des Zuordnungsanfragemoduls, um das Zuordnungsinformationspuffermodul zu fragen, und wenn es keine Zuordnungsbeziehung zwischen der AID und der RID des Ziel-Endhosts in dem Zuordnungsinformationspuffermodul gibt, Weiterleiten der Botschaft nach Warten darauf, dass das Zuordnungsanfragemodul eine Zuordnungsanfrageantwort des Zuordnungsservers empfängt; oder
das Botschaftenverarbeitungsmodul ausgestaltet ist, um das Weiterleiten der Datenbotschaft mithilfe einer Verkapselung oder einer Ersetzung zu implementieren.

10. Zugriffsdienstknoten, wobei sich der Zugriffsdienstknoten ASN in einem Identity Locator Separation Netzwerk befindet, welches einen Domänennamensystem-Server DNS-Server umfasst, wobei der DNS-Server ausgestaltet ist, um eine entsprechende Beziehung zwischen einem Domänennamen und einer Zugriffskennung AID eines Endhosts zu speichern, um eine DNS-Anfragebotschaft, die einen Domänennamen eines Ziel-Endhosts trägt, welche von einem Quellen-Endhost übertragen wird, zu empfangen, und um eine DNS-Antwortbotschaft, die eine AID des Ziel-Endhosts trägt, an den Quellen-Endhost zurückzugeben, und wobei der ASN umfasst:
ein Überwachungsmodul, das mit einem Botschaftenverarbeitungsmodul verbunden ist und ausgestaltet ist, um die DNS-Antwortbotschaft zu überwachen, um eine AID des Ziel-Endhosts in der überwachten Antwortbotschaft zu beschaffen;
ein Zuordnungsanfragemodul, das mit dem Überwachungsmodul verbunden ist und ausgestaltet ist, um nach der AID des Ziel-Endhosts zu fragen, welche von dem Überwachungsmodul beschafft wird, um eine Routerkennung RID des Ziel-Endhosts zu beschaffen; und
ein Botschaftenverarbeitungsmodul, das mit dem Zuordnungsanfragemodul und dem Überwachungsmodul verbunden ist und ausgestaltet ist, um eine Datenbotschaft zu empfangen, die von dem Quellen-Endhost an den Ziel-Endhost übertragen wird, und um die Datenbotschaft in Übereinstimmung mit der RID, die von dem Zuordnungsanfragemodul beschafft wird, weiterzuleiten; und um eine Botschaft, die von einem Weiterleitungsnetzwerk an den Quellen-Endhost unter dem ASN übertragen wird, zu empfangen und weiterzuleiten;
wobei der ASN ferner ein Zuordnungsinformationspuffermodul umfasst, das mit dem Zuordnungsanfragemodul verbunden ist und ausgestaltet ist, um eine Zuordnungsbeziehung zwischen einer AID und einer RID des Endhosts zu puffern;
wobei das Zuordnungsanfragemodul ausgestaltet ist, um die RID des Ziel-Endhosts auf folgende Weise zu beschaffen: das Zuordnungsinformationspuffermodul fragen, und wenn es in dem Zuordnungsinformationspuffermodul keine Zuordnungsbeziehung zwischen der AID und der RID des Ziel-Endhosts gibt, Übertragen einer Zuordnungsanfrageanforderung an den Zuordnungsserver und Beschaffen der RID des Ziel-Endhosts in Übereinstimmung mit einer Zuordnungsanfrageantwort des Zuordnungsservers; und
wobei das Zuordnungsanfragemodul ferner ausgestaltet ist, um die Zuordnungsbeziehung zwischen der AID und der RID des Ziel-Endhosts in dem Zuordnungsinformationspuffermodul zu speichern.

11. System zum Verarbeiten einer Datenbotschaft, wobei das System zum Verarbeiten einer Datenbotschaft auf der Grundlage eines Identity Locator Separation Netzwerks implementiert ist und das System einen Endhost, einen Zugriffsdienstknoten ASN und einen Domänennamensystem-Server DNS-Server umfasst, wobei
der Endhost ein Domänennamenanfragemodul und ein Botschaftenempfangs-/Übertragungsmodul umfasst, wobei das Domänennamenanfragemodul ausgestaltet ist, um eine DNS-Anfragebotschaft, die einen Domänennamen eines Ziel-Endhosts trägt, an den DNS-Server zu übertragen und um eine DNS-Antwortbotschaft, die von dem DNS-Server zurückgegeben wird, zu empfangen, die eine Zugriffskennung AID des Ziel-Endhosts trägt; und wobei das Botschaftenempfangs-/Übertragungsmodul ausgestaltet ist, um die Datenbotschaft in Übereinstimmung mit der AID des Ziel-Endhosts in der DNS-Antwortbotschaft an den Ziel-Endhost zu übertragen und um die Datenbotschaft zu empfangen;
wobei der ASN umfasst:
ein Überwachungsmodul, das mit einem Botschaftenverarbeitungsmodul verbunden und ausgestaltet ist, um die DNS-Antwortbotschaft zu überwachen, um eine AID des Ziel-Endhosts in der überwachten DNS-Antwortbotschaft zu beschaffen;
ein Zuordnungsanfragemodul, das mit dem Überwachungsmodul verbunden und ausgestaltet ist, um einen Zuordnungsserver nach der AID des Ziel-Endhosts zu fragen, welche von dem Überwachungsmodul beschafft wird, um eine Routerkennung RID des Ziel-Endhosts zu beschaffen; und
ein Botschaftenverarbeitungsmodul, das mit dem Zuordnungsanfragemodul und dem Überwachungsmodul verbunden ist und ausgestaltet ist, um eine Datenbotschaft zu empfangen, die von dem Quellen-Endhost an den Ziel-Endhost übertragen wird, und um die Datenbotschaft in Übereinstimmung mit der RID weiterzuleiten, die von dem Zuordnungsanfragemodul beschafft wird; und um eine Botschaft, die von einem Weiterleitungsnetzwerk an den Quellen-Endhost unter dem ASN übertragen wird, zu empfangen und weiterzuleiten; und
wobei der DNS-Server ausgestaltet ist, um eine entsprechende Beziehung zwischen einem Domänennamen und einer AID eines Endhosts zu speichern, um eine DNS-Anfragebotschaft zu empfangen, die von dem Endhost übertragen wird, und um die DNS-Antwortbotschaft an den Endhost zurückzugeben.

12. System nach Anspruch 11, wobei das Überwachungsmodul des ASN ausgestaltet ist, um die DNS-Antwortbotschaft von einer Weiterleitungsnetzwerkbotschaft, die von dem Botschaftenverarbeitungsmodul empfangen wird, auf folgende Weise zu überwachen: Bestimmen, ob die empfangene Weiterleitungsnetzwerkbotschaft eine DNS-Antwortbotschaft ist, in Übereinstimmung mit einem DNS-Botschaftenformat, einer DNS-Portnummer, einer DNS AID oder einer DNS RID.

13. System nach Anspruch 11, wobei
das Botschaftenverarbeitungsmodul ferner ausgestaltet ist, um die DNS-Anfragebotschaft, die von dem Quellen-Endhost an den DNS-Server übertragen wird, und die DNS-Antwortbotschaft, die von dem DNS-Server an den Quellen-Endhost übertragen wird, zu empfangen und weiterzuleiten.

14. System nach Anspruch 11, wobei das Botschaftenverarbeitungsmodul des ASN ausgestaltet ist, um die Datenbotschaft auf folgende Weise weiterzuleiten: nach Empfangen der Datenbotschaft, die von dem Quellen-Endhost an den Ziel-Endhost übertragen wird, Informieren des Zuordnungsanfragemoduls, um das Zuordnungsinformationspuffermodul zu fragen, und wenn es in dem Zuordnungsinformationspuffermodul keine Zuordnungsbeziehung zwischen der AID und der RID des Ziel-Endhosts gibt, Weiterleiten der Datenbotschaft, nachdem von dem Zuordnungsanfragemodul auf den Empfang einer Zuordnungsanfrageantwort des Zuordnungsservers gewartet wurde; oder
eine Quellenadresse und eine Zieladresse in der Datenbotschaft, die von dem Quellen-Endhost an den Ziel-Endhost übertragen wird, jeweils die AIDs des Quellen-Endhosts bzw. des Ziel-Endhosts sind,
wobei das Botschaftenverarbeitungsmodul ferner ausgestaltet ist, um, wenn es die Datenbotschaft weiterleitet, die Datenbotschaft, die von dem Quellen-Endhost übertragen wird, unter Verwendung der RIDs des Quellen-Endhosts und des Ziel-Endhosts einzukapseln, wobei die Quellenadresse und die Zieladresse der eingekapselten Datenbotschaft jeweils RIDs des Quellen-Endhosts bzw. des Ziel-Endhosts sind und die eingekapselte Botschaft ferner AIDs des Quellen-Endhosts und des Ziel-Endhosts umfasst; oder
die Quellenadresse und die Zieladresse der Datenbotschaft, die von dem Quellen-Endhost übertragen und von dem Botschaftenverarbeitungsmodul des ASN empfangen wird, jeweils AIDs des Quellen-Endhosts bzw. des Ziel-Endhosts sind;
das Botschaftenverarbeitungsmodul ferner ausgestaltet ist, um, wenn es die Datenbotschaft weiterleitet, die AIDs des Quellen-Endhosts und des Ziel-Endhosts jeweils durch die RIDs des Quellen-Endhosts bzw. des Ziel-Endhosts zu ersetzen, wobei die AID und die RID des Quellen-Endhosts einander eindeutig entsprechen und die AID und die RID des Ziel-Endhosts einander eindeutig entsprechen.

15. System zum Verarbeiten einer Datenbotschaft, wobei das System zum Verarbeiten einer Datenbotschaft auf der Grundlage eines Identity Locator Separation Netzwerks implementiert ist und das System einen Endhost, einen Zugriffsdienstknoten ASN und einen Domänennamensystem-Server DNS-Server umfasst, wobei
der Endhost ein Domänennamenanfragemodul und ein Botschaftenempfangs-/Übertragungsmodul umfasst, wobei das Domänennamenanfragemodul ausgestaltet ist, um eine DNS-Anfragebotschaft, die einen Domänennamen eines Ziel-Endhosts trägt, an den DNS-Server zu übertragen und um eine DNS-Antwortbotschaft zu empfangen, die eine Zugriffskennung AID des Ziel-Endhosts trägt, die von dem DNS-Server zurückgegeben wird; und das Botschaftenempfangs-/Übertragungsmodul ausgestaltet ist, um die Datenbotschaft an den Ziel-Endhost in Übereinstimmung mit der AID des Ziel-Endhosts in der DNS-Antwortbotschaft zu übertragen und um die Datenbotschaft zu empfangen;
der ASN umfasst:
ein Überwachungsmodul, das mit einem Botschaftenverarbeitungsmodul verbunden ist und ausgestaltet ist, um die DNS-Antwortbotschaft zu überwachen, um eine AID des Ziel-Endhosts in der überwachten DNS-Antwortbotschaft zu beschaffen;
ein Zuordnungsanfragemodul, das mit dem Überwachungsmodul verbunden ist und ausgestaltet ist, um nach der AID des Ziel-Endhosts zu fragen, welche von dem Überwachungsmodul beschafft wird, um eine Routerkennung RID des Ziel-Endhosts zu beschaffen; und
ein Botschaftenverarbeitungsmodul, das mit dem Zuordnungsanfragemodul und dem Überwachungsmodul verbunden ist und ausgestaltet ist, um eine Datenbotschaft, die von dem Quellen-Endhost an den Ziel-Endhost übertragen wird, zu empfangen und um die Datenbotschaft in Übereinstimmung mit der RID weiterzuleiten, die von dem Zuordnungsanfragemodul beschafft wird; und um eine Botschaft, die von einem Weiterleitungsnetzwerk an den Quellen-Endhost unter dem ASN übertragen wird, zu empfangen und weiterzuleiten; und
wobei der DNS-Server ausgestaltet ist, um eine entsprechende Beziehung zwischen einem Domänennamen und einer AID eines Endhosts zu speichern, um eine DNS-Anfragebotschaft, die von dem Endhost übertragen wird, zu empfangen und um die DNS-Antwortbotschaft an den Endhost zurückzugeben;
wobei der ASN ferner ein Zuordnungsinformationspuffermodul umfasst, das mit dem Zuordnungsanfragemodul verbunden ist und ausgestaltet ist, um eine Zuordnungsbeziehung zwischen einer AID und einer RID des Endhosts zu puffern;
wobei das Zuordnungsanfragemodul ausgestaltet ist, um die RID des Ziel-Endhosts auf folgende Weise zu beschaffen: Fragen des Zuordnungsinformationspuffermoduls, und wenn in dem Zuordnungsinformationspuffermodul keine Zuordnungsbeziehung zwischen der AID und der RID des Ziel-Endhosts vorhanden ist, Übertragen einer Zuordnungsanfrageanforderung an den Zuordnungsserver, Beschaffen der RID des Ziel-Endhosts in Übereinstimmung mit einer Zuordnungsanfrageantwort des Zuordnungsservers; und
wobei das Zuordnungsanfragemodul ferner ausgestaltet ist, um die Zuordnungsbeziehung zwischen der AID und der RID des Ziel-Endhosts in dem Zuordnungsinformationspuffermodul zu speichern.

## Revendications

1. Procédé de traitement d'un message de données, le procédé étant mis en oeuvre sur la base d'un réseau identité-localisateur-séparation, et un serveur de système de noms de domaine, DNS (*Domain Name System*)*,* étant utilisé pour stocker une relation correspondante entre un nom de domaine et un identificateur d'accès, AID (*Access Identifier*), d'un hôte final, et le procédé comprenant :
A. un hôte final source émettant un message d'interrogation DNS portant un nom de domaine d'un hôte final de destination vers un serveur DNS, et le serveur DNS renvoyant un message de réponse DNS incluant un AID de l'hôte final de destination vers l'hôte final source ;
B. un noeud de service d'accès, ASN (*Access Service Node*), surveillant le message de réponse DNS pour obtenir l'AID de l'hôte final de destination dans le message de réponse surveillé ;
C. l'ASN interrogeant un serveur de mappage en fonction de l'AID de l'hôte final de destination pour obtenir un identificateur de routeur, RID (*Router Identifier*)*,* de l'hôte final de destination ; et
D. après réception d'un message de données émis par l'hôte final source vers l'hôte final de destination, l'ASN réacheminant le message de données en fonction du RID de l'hôte final de destination.

2. Procédé selon la revendication 1, dans lequel, dans l'étape B, l'ASN surveille le message de réponse DNS depuis un message de réseau réacheminant reçu d'une manière suivante : en déterminant si le message de réseau réacheminant reçu est un message de réponse DNS en fonction d'un format de message DNS, d'un numéro de port DNS, d'un AID DNS ou d'un RID DNS.

3. Procédé selon la revendication 1, dans lequel, dans l'étape A, le message d'interrogation DNS est réacheminé vers le serveur DNS via l'ASN ;
le procédé comprenant en outre : après obtention de l'AID de l'hôte final de destination depuis le message de réponse DNS, l'ASN réacheminant le message de réponse DNS vers l'hôte final source ; et l'hôte final source émettant le message de données vers l'hôte final de destination en fonction de l'AID de l'hôte final de destination dans le message de réponse DNS.

4. Procédé selon la revendication 1, dans lequel, dans l'étape D, l'étape de réacheminement du message de données en fonction du RID de l'hôte final de destination comprend : après réception du message de données émis par l'hôte final source vers l'hôte final de destination, l'ASN interrogeant d'abord une mémoire tampon locale, et s'il n'y a aucune relation de mappage entre l'AID et le RID de l'hôte final de destination dans la mémoire tampon locale ou la relation de mappage entre l'AID et le RID de l'hôte final de destination est interrogée, réacheminant le message de données après avoir attendu de recevoir une réponse d'interrogation de mappage du serveur de mappage ; ou
dans l'étape D, l'ASN met en oeuvre le réacheminement du message de données par une voie d'encapsulation ou une voie de substitution ; ou
dans l'étape D, une adresse source et une adresse de destination dans le message de données émis par l'hôte final source sont les AID de l'hôte final source et de l'hôte final de destination respectivement ;
le procédé comprenant en outre : lors du réacheminement du message de données, l'ASN encapsulant le message de données émis par l'hôte final source à l'aide des RID de l'hôte final source et de l'hôte final de destination, une adresse source et une adresse de destination du message de données encapsulé étant des RID de l'hôte final source et de l'hôte final de destination respectivement, et le message encapsulé comprenant en outre les AID de l'hôte final source et de l'hôte final de destination ; ou
l'adresse source et l'adresse de destination du message de données émis par l'hôte final source sont des AID de l'hôte final source et de l'hôte final de destination respectivement ;
le procédé comprenant en outre : lors du réacheminement du message de données, l'ASN substituant les AID de l'hôte final source et de l'hôte final de destination par les RID de l'hôte final source et de l'hôte final de destination respectivement, l'AID et le RID de l'hôte final source correspondant l'un à l'autre de façon unique, et l'AID et le RID de l'hôte final de destination correspondant l'un par rapport à l'autre de façon unique.

5. Procédé de traitement d'un message de données, le procédé étant mis en oeuvre sur la base d'un réseau identité-localisateur-séparation, et un serveur de système de noms de domaine, DNS, étant utilisé pour stocker une relation correspondante entre un nom de domaine et un identificateur d'accès, AID, d'un hôte final, et le procédé comprenant :
A. un hôte final source émettant un message d'interrogation DNS portant un nom de domaine d'un hôte final de destination vers un serveur DNS, et le serveur DNS renvoyant un message de réponse DNS incluant un AID de l'hôte final de destination vers l'hôte final source ;
B. un noeud de service d'accès, ASN, surveillant le message de réponse DNS pour obtenir l'AID de l'hôte final de destination dans le message de réponse surveillé ;
C. l'ASN interrogeant en fonction de l'AID de l'hôte final de destination pour obtenir un identificateur de routeur, RID, de l'hôte final de destination ; et
D. après réception d'un message de données émis par l'hôte final source vers l'hôte final de destination, l'ASN réacheminant le message de données en fonction du RID de l'hôte final de destination ;
dans lequel l'étape C comprend : l'ASN interrogeant une mémoire tampon locale, et s'il n'y a aucune relation de mappage entre l'AID et le RID de l'hôte final de destination dans la mémoire tampon locale, émettant une requête d'interrogation de mappage vers le serveur de mappage, obtenant le RID de l'hôte final de destination en fonction d'une réponse d'interrogation de mappage du serveur de mappage, et mettant en mémoire tampon la relation de mappage entre l'AID et le RID de l'hôte final de destination.

6. Noeud de service d'accès, le noeud de service d'accès, ASN, étant situé dans un réseau identité-localisateur-séparation qui comprend un serveur de système de noms de domaine, DNS, le serveur DNS étant configuré pour stocker une relation correspondante entre un nom de domaine et un identificateur d'accès, AID, d'un hôte final, recevoir un message d'interrogation DNS portant un nom de domaine d'un hôte final de destination qui est émis par un hôte final source, et renvoyer un message de réponse DNS portant un AID de l'hôte final de destination vers l'hôte final source, et l'ASN comprenant :
un module de surveillance, connecté à un module de traitement de message, et configuré pour surveiller le message de réponse DNS afin d'obtenir un AID de l'hôte final de destination dans le message de réponse surveillé ;
un module d'interrogation de mappage, connecté au module de surveillance, et configuré pour interroger un serveur de mappage en fonction de l'AID de l'hôte final de destination qui a été obtenu par le module de surveillance afin d'obtenir un identificateur de routeur, RID, de l'hôte final de destination ; et
un module de traitement de message, connecté au module d'interrogation de mappage et au module de surveillance, et configuré pour recevoir un message de données émis par l'hôte final source vers l'hôte final de destination, et réacheminer le message de données en fonction du RID obtenu par le module d'interrogation de mappage ; et recevoir et réacheminer un message émis depuis un réseau réacheminant vers l'hôte final source sous l'ASN.

7. Noeud de service d'accès selon la revendication 6, dans lequel le module de surveillance est configuré pour surveiller le message de réponse DNS depuis un message de réseau réacheminant reçu par le module de traitement de message d'une manière suivante : en déterminant si le message de réseau réacheminant reçu par le module de traitement de message est un message de réponse DNS en fonction d'un format de message DNS, d'un numéro de port DNS, d'un AID DNS ou d'un RID DNS.

8. Noeud de service d'accès selon la revendication 6, dans lequel :
le module de traitement de message est en outre configuré pour recevoir et réacheminer le message d'interrogation DNS émis par l'hôte final source vers le serveur DNS, et le message de réponse DNS émis par le serveur DNS vers l'hôte final source.

9. Noeud de service d'accès selon la revendication 6, dans lequel le module de traitement de message est configuré pour réacheminer le message de données d'une manière suivante : après réception du message de données émis par l'hôte final source vers l'hôte final de destination, en invitant le module d'interrogation de mappage à interroger le module de mise en mémoire tampon d'informations de mappage, et s'il n'y a aucune relation de mappage entre l'AID et le RID de l'hôte final de destination dans le module de mise en mémoire tampon d'informations de mappage, en réacheminant le message de données après avoir attendu que le module d'interrogation de mappage eût reçu une réponse d'interrogation de mappage du serveur de mappage ; ou
le module de traitement de message est configuré pour mettre en oeuvre le réacheminement du message de données par une voie d'encapsulation ou une voie de substitution.

10. Noeud de service d'accès, le noeud de service d'accès, ASN, étant situé dans un réseau identité-localisateur-séparation qui comprend un serveur de système de noms de domaine, DNS, le serveur DNS étant configuré pour stocker une relation correspondante entre un nom de domaine et un identificateur d'accès, AID, d'un hôte final, recevoir un message d'interrogation DNS portant un nom de domaine d'un hôte final de destination qui est émis par un hôte final source, et renvoyer un message de réponse DNS portant un AID de l'hôte final de destination vers l'hôte final source, et l'ASN comprenant :
un module de surveillance, connecté à un module de traitement de message, et configuré pour surveiller le message de réponse DNS afin d'obtenir un AID de l'hôte final de destination dans le message de réponse surveillé ;
un module d'interrogation de mappage, connecté au module de surveillance, et configuré pour interroger en fonction de l'AID de l'hôte final de destination qui a été obtenu par le module de surveillance afin d'obtenir un identificateur de routeur, RID, de l'hôte final de destination ; et
un module de traitement de message, connecté au module d'interrogation de mappage et au module de surveillance, et configuré pour recevoir un message de données émis par l'hôte final source vers l'hôte final de destination, et réacheminer le message de données en fonction du RID obtenu par le module d'interrogation de mappage ; et recevoir et réacheminer un message émis depuis un réseau réacheminant vers l'hôte final source sous l'ASN ;
l'ASN comprenant en outre un module de mise en mémoire tampon d'informations de mappage connecté au module d'interrogation de mappage, et configuré pour mettre en mémoire tampon une relation de mappage entre un AID et un RID de l'hôte final ;
dans lequel le module d'interrogation de mappage est configuré pour obtenir le RID de l'hôte final de destination d'une manière suivante : en interrogeant le module de mise en mémoire tampon d'informations de mappage, et s'il n'y a aucune relation de mappage entre l'AID et le RID de l'hôte final de destination dans le module de mise en mémoire tampon d'informations de mappage, en émettant une requête d'interrogation de mappage vers le serveur de mappage, et en obtenant le RID de l'hôte final de destination en fonction d'une réponse d'interrogation de mappage du serveur de mappage ; et
le module d'interrogation de mappage est en outre configuré pour stocker la relation de mappage entre l'AID et le RID de l'hôte final de destination dans le module de mise en mémoire tampon d'informations de mappage.

11. Système de traitement d'un message de données, le système de traitement d'un message de données étant mis en oeuvre sur la base d'un réseau identité-localisateur-séparation, et le système comprenant un hôte final, un noeud de service d'accès, ASN, et un serveur de système de noms de domaine, DNS, dans lequel :
l'hôte final comprend un module d'interrogation de nom de domaine et un module de réception/émission de message, le module d'interrogation de nom de domaine étant configuré pour émettre un message d'interrogation DNS portant un nom de domaine d'un hôte final de destination vers le serveur DNS, et recevoir un message de réponse DNS portant un identificateur d'accès, AID, de l'hôte final de destination renvoyé par le serveur DNS ; et le module de réception/ émission de message étant configuré pour émettre le message de données vers l'hôte final de destination en fonction de l'AID de l'hôte final de destination dans le message de réponse DNS, et recevoir le message de données ;
l'ASN comprend :
un module de surveillance, connecté à un module de traitement de message, et configuré pour surveiller le message de réponse DNS afin d'obtenir un AID de l'hôte final de destination dans le message de réponse DNS surveillé ;
un module d'interrogation de mappage, connecté au module de surveillance, et configuré pour interroger un serveur de mappage en fonction de l'AID de l'hôte final de destination qui a été obtenu par le module de surveillance afin d'obtenir un identificateur de routeur, RID, de l'hôte final de destination ; et
un module de traitement de message, connecté au module d'interrogation de mappage et au module de surveillance, et configuré pour recevoir un message de données émis par l'hôte final source vers l'hôte final de destination, et réacheminer le message de données en fonction du RID obtenu par le module d'interrogation de mappage ; et recevoir et réacheminer un message émis depuis un réseau réacheminant vers l'hôte final source sous l'ASN, et
le serveur DNS étant configuré pour stocker une relation correspondante entre un nom de domaine et un AID d'un hôte final, recevoir un message d'interrogation DNS émis par l'hôte final et renvoyer le message de réponse DNS vers l'hôte final.

12. Système selon la revendication 11, dans lequel le module de surveillance de l'ASN est configuré pour surveiller le message de réponse DNS depuis un message de réseau réacheminant reçu par le module de traitement de message d'une manière suivante : en déterminant si le message de réseau réacheminant reçu est un message de réponse DNS en fonction d'un format de message DNS, d'un numéro de port DNS, d'un AID DNS ou d'un RID DNS.

13. Système selon la revendication 11, dans lequel :
le module de traitement de message est en outre configuré pour recevoir et réacheminer le message d'interrogation DNS émis par l'hôte final source vers le serveur DNS, et le message de réponse DNS émis par le serveur DNS vers l'hôte final source.

14. Système selon la revendication 11, dans lequel le module de traitement de message de l'ASN est configuré pour réacheminer le message de données d'une manière suivante :
après réception du message de données émis par l'hôte final source vers l'hôte final de destination, inviter le module d'interrogation de mappage à interroger le module de mise en mémoire tampon d'informations de mappage, et s'il n'y a aucune relation de mappage entre l'AID et le RID de l'hôte final de destination dans le module de mise en mémoire tampon d'informations de mappage, en réacheminant le message de données après avoir attendu que le module d'interrogation de mappage eût reçu une réponse d'interrogation de mappage du serveur de mappage ; ou
une adresse source et une adresse de destination dans le message de données émis par l'hôte final source vers l'hôte final de destination sont les AID de l'hôte final source et de l'hôte final de destination respectivement,
le module de traitement de message est en outre configuré pour, lors du réacheminement du message de données, encapsuler le message de données émis par l'hôte final source à l'aide des RID de l'hôte final source et de l'hôte final de destination, l'adresse source et l'adresse de destination du message de données encapsulé étant des RID de l'hôte final source et de l'hôte final de destination respectivement, et le message encapsulé comprenant en outre les AID de l'hôte final source et de l'hôte final de destination ; ou
l'adresse source et l'adresse de destination du message de données émis par l'hôte final source et reçu par le module de traitement de message de l'ASN sont des AID de l'hôte final source et de l'hôte final de destination respectivement ;
le module de traitement de message est en outre configuré pour, lors du réacheminement du message de données, substituer les AID de l'hôte final source et de l'hôte final de destination par les RID de l'hôte final source et de l'hôte final de destination respectivement, l'AID et le RID de l'hôte final source correspondant l'un à l'autre de façon unique, et l'AID et le RID de l'hôte final de destination correspondant l'un par rapport à l'autre de façon unique.

15. Système de traitement d'un message de données, le système de traitement d'un message de données étant mis en oeuvre sur la base d'un réseau identité-localisateur-séparation, et le système comprenant un hôte final, un noeud de service d'accès, ASN, et un serveur de système de noms de domaine, DNS, dans lequel,
l'hôte final comprend un module d'interrogation de nom de domaine et un module de réception/émission de message, le module d'interrogation de nom de domaine étant configuré pour émettre un message d'interrogation DNS portant un nom de domaine d'un hôte final de destination vers le serveur DNS, et recevoir un message de réponse DNS portant un identificateur d'accès, AID, de l'hôte final de destination renvoyé par le serveur DNS ; et le module de réception/émission de message étant configuré pour émettre le message de données vers l'hôte final de destination en fonction de l'AID de l'hôte final de destination dans le message de réponse DNS, et recevoir le message de données ;
l'ASN comprend :
un module de surveillance, connecté à un module de traitement de message, et configuré pour surveiller le message de réponse DNS afin d'obtenir un AID de l'hôte final de destination dans le message de réponse DNS surveillé ;
un module d'interrogation de mappage, connecté au module de surveillance, et configuré pour interroger en fonction de l'AID de l'hôte final de destination qui a été obtenu par le module de surveillance afin d'obtenir un identificateur de routeur, RID, de l'hôte final de destination ; et
un module de traitement de message, connecté au module d'interrogation de mappage et au module de surveillance, et configuré pour recevoir un message de données émis par l'hôte final source vers l'hôte final de destination, et réacheminer le message de données en fonction du RID obtenu par le module d'interrogation de mappage ; et recevoir et réacheminer un message émis depuis un réseau réacheminant vers l'hôte final source sous l'ASN ; et
le serveur DNS est configuré pour stocker une relation correspondante entre un nom de domaine et un AID d'un hôte final, recevoir un message d'interrogation DNS émis par l'hôte final et renvoyer le message de réponse DNS vers l'hôte final ;
dans lequel l'ASN comprend en outre un module de mise en mémoire tampon d'informations de mappage connecté au module d'interrogation de mappage, et configuré pour mettre en mémoire tampon une relation de mappage entre un AID et un RID de l'hôte final ;
dans lequel le module d'interrogation de mappage est configuré pour obtenir le RID de l'hôte final de destination d'une manière suivante : en interrogeant le module de mise en mémoire tampon d'informations de mappage, et s'il n'y a aucune relation de mappage entre l'AID et le RID de l'hôte final de destination dans le module de mise en mémoire tampon d'informations de mappage, en émettant une requête d'interrogation de mappage vers le serveur de mappage, et en obtenant le RID de l'hôte final de destination en fonction d'une réponse d'interrogation de mappage du serveur de mappage ; et
le module d'interrogation de mappage est en outre configuré pour stocker la relation de mappage entre l'AID et le RID de l'hôte final de destination dans le module de mise en mémoire tampon d'informations de mappage.
